# EUROPÄISCHE PATENTSCHRIFT

(11) **EP 2 438 323 B1**
(45) Veröffentlichungstag und Bekanntmachung des Hinweises auf die Patenterteilung: **26.06.2013**
(21) Anmeldenummer: 10722662.3
(22) Anmeldetag: 19.05.2010
(51) Int. Cl.: F16D 25/061, F16H 57/08, F16H 63/30

(54) **ANORDNUNG MIT ZUMINDEST EINER KLAUENKUPPLUNG**
ARRANGEMENT COMPRISING AT LEAST ONE DOG CLUTCH
ENSEMBLE COMPRENANT AU MOINS UN EMBRAYAGE À CRABOTS

(30) Priorität: 04.06.2009 DE 102009026707
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2010/056906
(87) Internationale Veröffentlichungsnummer: WO 2010/139556

(56) Entgegenhaltungen:
- DE-A1- 2 246 123
- DE-A1-102005 035 156
- GB-A- 2 368 102
- US-A- 3 444 972
- US-A- 5 667 330
- US-A1- 2006 040 782

## Beschreibung

Die vorliegende Erfindung betrifft eine Anordnung mit zumindest einer Klauenkupplung gemäß der im Oberbegriff des Patentanspruches 1 näher definierten Art.

Aus der Fahrzeugtechnik sind Anordnungen mit zumindest einer Klauenkupplung als Schaltelement zum Verbinden einer Welle eines Getriebes mit einem Bauteil bekannt. Beispielsweise in der Druckschrift GB 2 368 102 wird ein automatisches Getriebe mit einer Einrichtung zum Entkoppeln des Getriebes von einem Antriebsstrang eines Fahrzeuges beschrieben. Die Einrichtung ist als Klauenkupplung ausgebildet, welche hydraulisch über einen Betätigungskolben betätigt wird, der im Inneren einer Welle angeordnet ist. Der Betätigungskolben wird einseitig mit Druck beaufschlagt, um gegen eine Rückstellfeder bewegt zu werden. Zum Betätigen der Schaltklaue wird ein mit dem Betätigungskolben gekoppelter Schaltfinger verwendet, der durch eine Ausnehmung der Welle geführt wird.

Ferner ist aus der Druckschrift US 5 667 330 eine weitere Anordnung mit einer Klauenkupplung als Schaltelement bekannt. Bei der bekannten Anordnung wird die Klauenkupplung verwendet, um eine Zapfwelle mit einer Getriebeausgangswelle eines Traktors zu verbinden. Dazu wird ein Betätigungskolben im Inneren der Ausgangswelle hydraulisch betätigt, wobei die Schaltklaue über einen Bolzen betätigt wird, der durch eine Ausnehmung der Ausgangswelle von dem Betätigungskolben zur Schaitklaue geführt wird.

Die gattungsgemäße Druckschrift US2006/0040782A1 offenbart eine Getriebeanordnung mit einer Klauenkupplung, welche mittels eines Kolbens nach einer Seite und mittels einer Feder nach der anderen Seite betätigt wird. Die Feder beansprucht hierbei nachteiligerweise zusätzlichen Bauraum.

Der vorliegenden Erfindung liegt die Aufgabe zu Grunde, eine möglichst bauraumneutrale Anordnung für eine Klauenkupplung in einem Automatgetriebe vorzusehen.

Die Aufgabe wird erfindungsgemäß durch die Merkmale des Patentanspruches 1 gelöst. Weitere vorteilhafte Ausgestaltungen ergeben sich aus den Zeichnungen und den Unteransprüchen.

Demnach wird eine Anordnung mit zumindest einer Klauenkupplung oder dergleichen zum schaltbaren Koppeln und Entkoppeln einer Antriebswelle eines Automatgetriebes in Planetenbauweise mit zumindest einem Bauteil eines Planetenradsatzes vorgeschlagen, wobei die Klauenkupplung eine Schaltklaue und einen Betätigungskolben umfasst und zentrisch im Wesentlichen innerhalb eines Sonnenrades des Planetenradsatzes angeordnet ist. Die Schaltklaue ist hierbei koaxial zur Antriebswelle angeordnet. Die Antriebswelle ist mit einem Bauteil eines Planetenradsatzes verbindbar. Zudem ist erfindungsgemäß der Betätigungskolben im Inneren der Antriebswelle angeordnet und in beide Bewegungsrichtungen hydraulisch betätigbar, wobei der Betätigungskolben nur von einer Seite her ansteuerbar ist. Auf diese Weise kann vorteilhafterweise die Klauenkupplung bezogen auf die axiale Erstreckung etwa innerhalb des Sonnenrades des Planetenradsatzes vorgesehen werden. Folglich wird so eine bauraumsparende Anordnung realisiert, da die Klauenkupplung quasi in den Planetenradsatz integriert wird. Darüber hinaus erfolgt die Betätigung in beide Richtungen hydraulisch, so dass vorteilhafterweise keine weiteren Verstellelemente, wie beispielsweise Rückstellfedern, benötigt werden.

In einer vorteilhaften Ausgestaltung der Erfindung kann ein Hohlrad als Bauteil des Planetenradsatzes mittels der Schaltklaue mit der Antriebswelle oder dergleichen schaltbar verbindbar sein. Es können aber auch andere Bauteile des Planetenradsatzes mit der Schaltklaue geschaltet werden.

Vorzugsweise kann zur Druckmittelversorgung ein Rohr oder dergleichen in einem gehäusefesten Deckel ein gepresst sein und durch den Betätigungskolben in die als Zylinderraum des Betätigungskolben vorgesehene Bohrung der Antriebswelle geführt werden, um dem Betätigungskolben zum Öffnen der Schaltklaue mit Druckmittel zu beaufschlagen.

Zum Schließen der Schaltklaue kann in einer Ausgestaltung der Erfindung zumindest ein in dem gehäusefesten Deckel vorgesehener Druckmittel-Zuführungskanal oder dergleichen vorgesehen sein, der das Druckmittel in den als Zylinderraum des Betätigungskolbens vorgesehene Bohrung der Antriebswelle führt. Es sind auch andere konstruktive Ausgestaltungen der hydraulischen Betätigung der Schaltklaue beziehungsweise des Betätigungskolbens möglich.

Vorzugsweise kann zwischen dem Innendurchmesser der Bohrung in der Antriebswelle und dem Außendurchmesser des Betätigungskolbens eine Spielpassung vorgesehen sein. Auf diese Weise wird einerseits eine freie Bewegung des Betätigungskolbens realisiert und andererseits eine Abdichtung zwischen den Druckmittelströmen zum Schließen und Öffnen der Schaltklaue, also zum Koppeln und Entkoppeln der Antriebswelle mit dem Bauteil des Planetenradsatzes vorgesehen.

Bei dieser Ausführung kann vorzugsweise vorgesehen sein, dass die Schaltklaue über zumindest einen durch die Antriebswelle ragenden Bolzen oder dergleichen, der mit dem Betätigungskolben verbunden beziehungsweise gekoppelt ist, betätigt wird. Es sind auch andere Betätigungsarten der Schaltklaue möglich.

Eine andere Ausführungsvariante zur Betätigung der Schaltklaue kann vorsehen, dass der Betätigungskolben über mehrere radial durch die Antriebswelle hindurchragende Mitnahmefinger mit der Schaltklaue zur Axialbewegung gekoppelt ist. Beispielsweise können die Mitnahmefinger quasi ein Ankerblech oder dergleichen bilden, deren radialer Steg durch den Mitnahmefinger gebildet wird. Vorzugsweise sind mehrere am Umfang in einem vorbestimmten Winkel zueinander verteilt angeordnete Mitnahmefinger vorgesehen. Auf diese Weise kann eine flächige Anlage sowohl an der Schaltklaue als auch an dem Betätigungskolben realisiert werden, wodurch ein Verkippen oder Verklemmen sicher vermieden wird.

Unabhängig von den jeweiligen Ausführungsvarianten kann die Schaltklaue und das korrespondierende Gegenstück an dem zu schaltenden Bauteil zum Bespiel über eine gemeinsame Kronverzahnung oder auch über eine gemeinsame Steckverzahnung oder dergleichen verbunden werden.

Im Rahmen einer möglichen Ausführungsvariante der Erfindung kann vorgesehen sein, dass die Klauenkupplung einen als Schaltklaue ausgebildeten Betätigungskolben aufweist. Somit werden zwei Bauteile in ein gemeinsames Bauteil integriert. Dadurch kann weiterer Bauraum eingespart werden. Zur Abdichtung können innen und außen aufgrund der geringen Axialkräfte günstiger Weise Rechteckringe verwendet werden. Die Abdichtung kann aber auch zum Beispiel über O-Ringe oder dergleichen erfolgen. Zudem ist eine Abdichtung auch ohne Dichtelement über eine geringe Spielpassung zwischen den aneinander geführten Flächen möglich.

Gemäß einer vorteilhaften Weiterbildung können die Kronverzahnung oder auch die Steckverzahnung der Schaltklauenhälften ballig und/oder konisch beziehungsweise mit Hinterschnitt und/oder stirnseitig mit einer Fase oder einem Radius und/oder mit einem Zentrierkonus ausgeführt werden.

Es ist auch möglich, dass die Schaltklaue über eine Steckverzahnung mit der Antriebswelle drehfest verbunden und damit auch zentriert ist. Das korrespondierende Gegenstück der Schaltklaue zum Beispiel an dem Hohlrad des Planetenradsatzes ist vorzugsweise über ein Gleitlager oder dergleichen auf der Antriebswelle gelagert.

Im Rahmen einer vorteilhaften Ausführungsvariante kann bei der erfindungsgemäßen Anordnung vorgesehen sein, dass zur Dämpfung der Schaltbewegung der Schaltklaue zumindest ein Kolben oder dergleichen als Überdruckventil mit einer Rückstellfeder im Wesentlichen im Inneren der Antriebswelle angeordnet ist. Um den bei einer Zahn-auf-Zahn-Stellung zwischen der Verzahnung der Schaltklaue und dem korrespondierenden Gegenstück auftretenden Stoß dämpfen zu können, kann die Druckspitze über das Überdruckventil abgebaut werden. Dazu kann der Kolben über eine z.B. stärker als die Rückstellfeder des Betätigungskolbens ausgebildete Feder zurückgestellt werden. Durch die Hubbewegung des Kolbens wird das sich bei der Zahn-auf-Zahn-Stellung auf staunende Druckmittel aufgenommen. Bei einer Zahn-auf-Lücke-Stellung wird dieser Druckmittelanteil in vorteilhafter Weise wieder zur schnellen Befüllung des Zylinderraumes des Betätigungskolbens genutzt. Wahlweise kann eine Bohrung vorgesehen werden, über welche während der Bewegung des inneren Kolbens das überschüssige Öl abfließen kann.

Eine weitere Ausgestaltung der vorliegenden Erfindung kann vorsehen, dass die Schaltklaue koaxial zur Antriebswelle an ihrem äußeren Umfang anliegt, wobei der Betätigungskolben vorzugsweise im Inneren der Antriebswelle, z.B. in einer Bohrung oder dergleichen angeordnet ist.

Nachfolgend wird die vorliegende Erfindung anhand der Zeichnungen weiter erläutert. Es zeigen:
- Fig. 1: eine schematische, geschnittene Teilansicht einer ersten möglichen Ausführungsvariante einer erfindungsgemäßen Anordnung mit einer Klauenkupplung in einem Automatgetriebe in Planetenbauweise;
- Fig. 2: eine schematische, geschnittene Teilansicht einer zweiten Ausführungsvariante der Anordnung;
- Fig. 3: eine schematische, geschnittene Teilansicht einer dritten Ausführungsvariante der Anordnung;
- Fig. 4: eine schematische, geschnittene Teilansicht einer vierten Ausführungsvariante der Anordnung;
- Fig. 5: eine schematische, geschnittene Teilansicht einer fünften Ausführungsvariante der Anordnung;
- Fig. 6: eine geschnittene Teilansicht an der Schnittlinie A gemäß Figur 5;
- Fig. 7: eine schematische, geschnittene Teilansicht einer sechsten Ausführungsvariante der Anordnung;
- Fig. 8: eine geschnittene Teilansicht an der Schnittlinie B gemäß Figur 7; und
- Fig. 9: eine schematische, geschnittene Teilansicht einer siebenten Ausführungsvariante der Anordnung.

In den Figuren sind verschiedene Ausführungsvarianten einer erfindungsgemäßen Anordnung mit einer Klauenkupplung zum schaltbaren Koppeln und Entkoppeln einer Antriebswelle 1 eines Automatgetriebes in Planetenbauweise mit zumindest einem Bauteil des Planetenradsatzes 4 dargestellt, wobei als Bauteil bei sämtlichen Ausführungsvarianten exemplarisch ein Hohlrad 2 des Planetenradsatzes 4 verwendet wird, welches über die Klauenkupplung mit der Antriebswelle 1 verbunden wird. Gleiche Bauteile sind mit den selben Bezugszeichen in den verschiedenen Figuren bezeichnet.

Unabhängig von den jeweiligen Ausführungsvarianten ist erfindungsgemäß vorgesehen, dass die Klauenkupplung zentrisch im Wesentlichen innerhalb eines Sonnenrades 3 des Planetenradsatzes 4 angeordnet ist, um eine bauraumneutrale Anordnung der Klauenkupplung in dem Automatgetriebe zu realisieren.

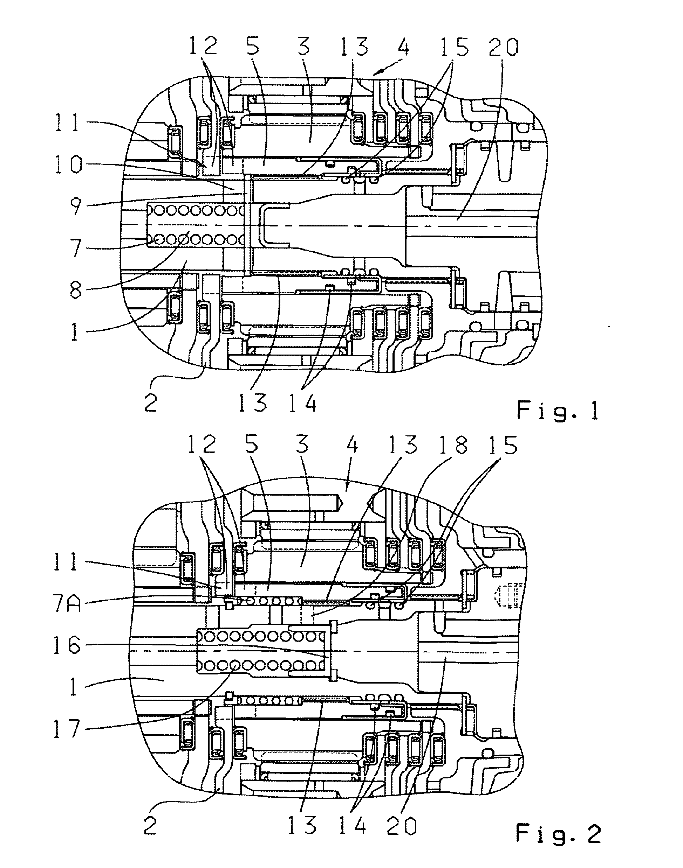

Bei der ersten und der zweiten Ausführungsvariante gemäß den Figuren 1 und 2 sind die Schaltklaue 5 und der Betätigungskolben 6 als ein gemeinsames Bauteil ausgebildet, welches mit dem Bezugszeichen der Schaltklaue 5 bezeichnet ist und nachfolgend nur als Schaltklaue 5 bezeichnet wird. Die Schaltklaue 5 ist koaxial zur Antriebswelle 1 angeordnet und liegt an dem äußeren Umfang der Antriebswelle 1 an. Um in axialer Richtung zum Koppeln und Entkoppeln der Antriebswelle mit dem Hohlrad 2 des Planetenradsatzes 4 bewegt zu werden, ist ein Zylinderraum zwischen der Antriebswelle 1 und dem Sonnenrad 3 vorgesehen, der mit Druckmittel beaufschlagt wird.

Zur Rückstellung des gemeinsamen Bauteils ist bei der ersten Ausführungsvariante eine Rückstellfeder 7 innerhalb der Antriebswelle 1 in einer Bohrung 8 angeordnet. An der Rückstellfeder 7 ist ein Mitnahmeblech 9 vorgesehen, welches durch eine oder mehrere Öffnungen in der Antriebswelle 1 in radialer Richtung hindurch ragt, um die Schaltklaue 5 zurückzustellen. Die Öffnung in der Antriebswelle 1 ist als Langloch 10 ausgeführt. Die Schaltklaue 5 und das korrespondierende Gegenstück 11 an dem Hohlrad 2 weisen eine gemeinsame Kronverzahnung 12 auf. Die Schaltklaue 5 ist über eine gemeinsame Steckverzahnung 13 auf der Antriebswelle 1 zentriert und drehfest aber axial verschieblich verbunden.

Sowohl bei der ersten als auch bei der zweiten Ausführungsvariante wird die Schaltklaue 5 innen und außen aufgrund der geringen Axialkräfte über Rechteckringdichtungen 14 und über O-Ringdichtungen 15 abgedichtet.

Im Unterschied zur ersten Ausführungsvariante wird bei der zweiten Ausführungsvariante gemäß Figur 2 die Rückstellfeder 7A außerhalb der Antriebswelle 1 zwischen der Schaltklaue 5 und der Antriebswelle 1 angeordnet. Ferner ist bei der zweiten Ausführungsvariante ein weiterer Kolben 16 als Überdruckventil vorgesehen, um einen Stoß zu dämpfen, welcher entsteht, wenn bei der Zuschaltung an der Schaltklaue 5 eine Zahn-auf-Zahn-Stellung auftritt. Der Kolben 16 ist im Inneren der Antriebswelle 1 angeordnet und über eine stärker als die Rückstellfeder 7A ausgebildete Feder 17 zurückgestellt. Durch die Hubbewegung des Kolbens 16 wird das bei einer Zahn-auf-Zahn-Stellung aufstauende Druckmittel aufgenommen. Wenn schiießlich eine Zahn-auf-Lückestellung bei der Schaltklaue 5 erreicht wird, kann dieser Druckmittelanteil wieder zur schnellen Befüllung verwendet werden, um die Schaltklaue 5 weiter zu bewegen. Wahlweise kann eine Bohrung 18, welche mit einer gestrichelten Linie in Figur 2 angedeutet ist, vorgesehen werden, über welche während der Bewegung des Kolbens 16 das überschüssige Druckmittel abfließen kann.

Auch bei der zweiten Ausführungsvariante wird wie bei der ersten Ausführungsvariante ein Zylinderraum zwischen der Antriebswelle 1 und dem Sonnenrad 3 gebildet, der mit Druckmittel zur Betätigung der Schaltklaue 5 beaufschlagt wird.

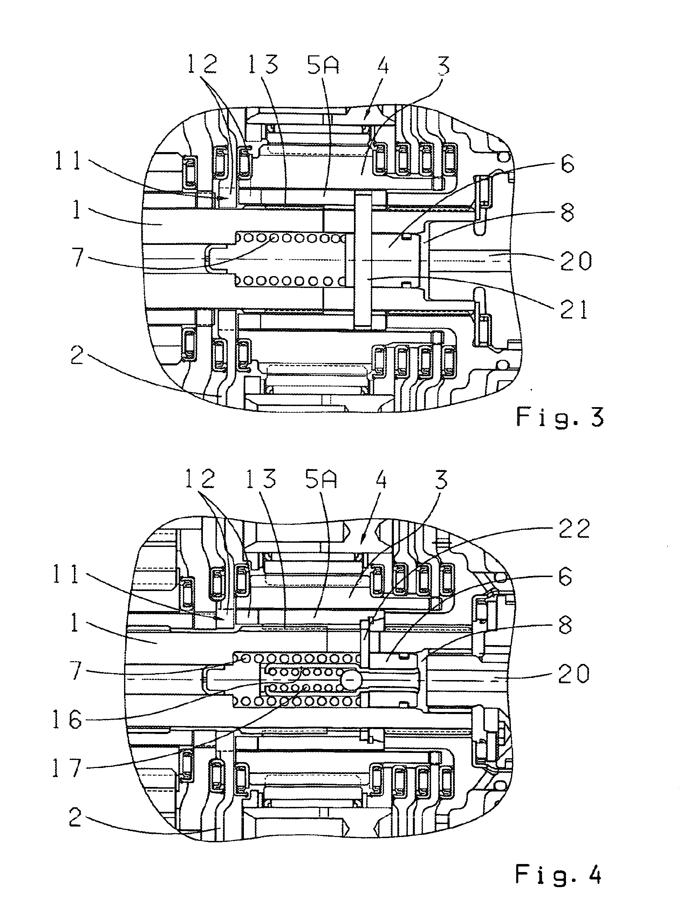

In Figur 3 ist eine dritte mögliche Ausführungsvariante der erfindungsgemäßen Anordnung dargestellt. Hierbei sind die Schaltklaue 5A und der Betätigungskolben 6 als separate Bauteile ausgeführt. Der Betätigungskolben 6 ist in einer Bohrung 8 im Inneren der Antriebswelle 1 axial bewegbar angeordnet. Zur Betätigung des Betätigungskolbens 6 wird Druckmittel über einen Druckmittel-Zuführkanal 20 zugeführt, um den Betätigungskolben 6 mit Druckmittel zu beaufschlagen und eine Bewegung in der Zeichnungsebene nach links gegen die Federkraft der Rückstellfeder 7 zu realisieren. Um die Bewegung des Betätigungskolbens 6 auf die Schaltklaue 5A zu übertragen, ist ein Bolzen 21 vorgesehen, der durch zwei vorzugsweise kreisrunde Öffnungen hindurch ragt und mit der Schaltklaue 5A verbunden ist.

In Figur 4 ist eine vierte mögliche Ausführungsvariante der erfindungsgemäßen Anordnung dargestellt, welche analog zur dritten Ausführungsvariante gemäß Figur 3 ausgeführt ist, jedoch wird die Übertragung der Bewegung des Betätigungskolbens mit drei Mitnahmefingern 22 realisiert und wobei jedoch zusätzlich ein Überdruckventil verwendet wird, dessen Funktion mit der des zusätzlichen Kolbens 16 bei der zweiten Ausführungsvariante gemäß Figur 2 vergleichbar ist, so dass auf die Beschreibung zu Fig. 2 verwiesen wird.

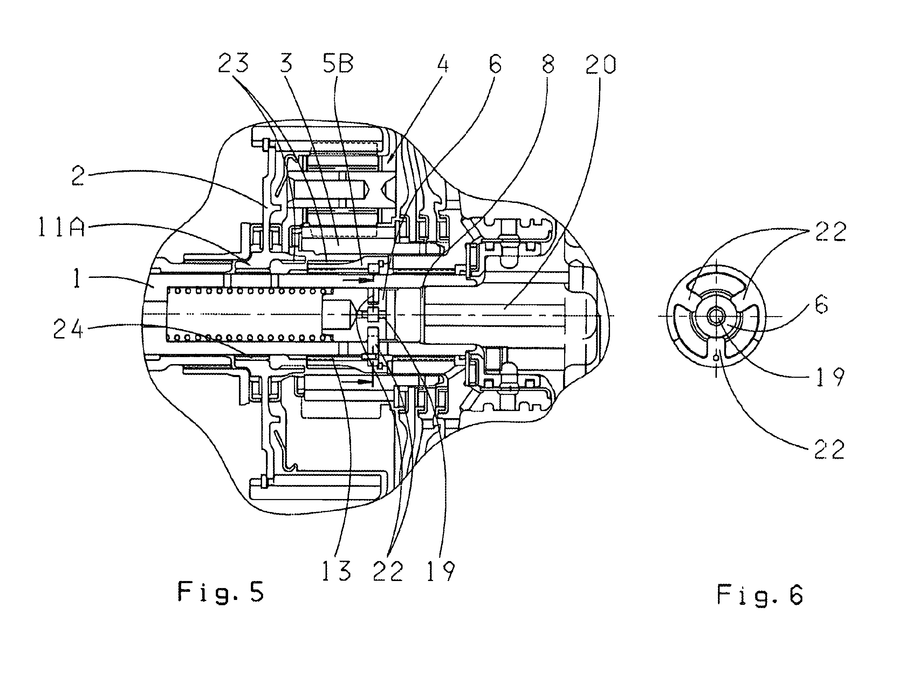

Eine fünfte Ausführungsvariante der vorgeschlagenen Anordnung ist in Figur 5 und 6 dargestellt. Die fünfte Ausführungsvariante ist vergleichbar mit der dritten Ausführungsvariante gemäß Figur 3, jedoch wird die Übertragung der Bewegung des Betätigungskolbens 6 wie in Fig. 4 mit drei Mitnahmefingern 22 realisiert, wodurch ein Verkippen beziehungsweise Verklemmen vermieden wird. Die Schaltklaue 5B und das korrespondierende Gegenstück 11 A an dem Hohlrad 2 weisen bei der fünften Ausführungsvariante eine gemeinsame Steckverzahnung 23 auf. Das Gegenstück 11 A an dem Hohlrad 2 ist über ein Gleitlager 24 auf der Antriebswelle 1 gelagert. Die Schaltklaue 5B ist über eine gemeinsame Steckverzahnung 13 mit der Antriebswelle 1 drehfest verbunden und auf dieser zentriert.

In Figur 6 ist eine geschnittene Teilansicht an der Schnittlinie A in Figur 5 gezeigt, aus der die etwa ankerförmige Ausgestaltung der Mitnahmefinger 22 verdeutlicht wird. Aufgrund der konstruktiven Form der Mitnahmefinger 22 ergibt sich quasi eine flächige Anlage sowohl an der Schaltklaue 5B als auch an dem Betätigungskolben 6. Im Inneren des Betätigungskolbens 6 ist ein Schmierölkanal 19 zur Schmierölversorgung angeordnet.

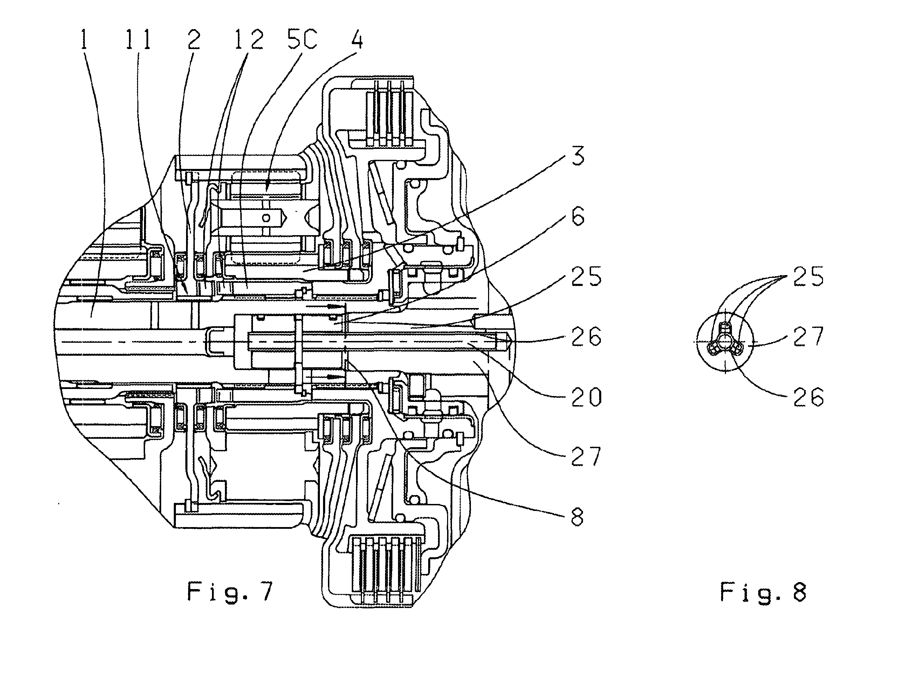

In Figur 7 ist eine sechste Ausführungsvariante der Anordnung dargestellt. Hierbei wird auf eine Rückstellfeder verzichtet, da die Betätigung des Betätigungskolbens 6 in beide Bewegungsrichtungen hydraulisch erfolgt. Die Ansteuerung erfolgt jedoch nur von einer Seite. Dazu wird ein Rohr 26 in einen gehäusefesten Deckel 27 eingepresst. Das Rohr 26 ist derart angeordnet, dass es durch den Betätigungskolben 6 geführt wird und Druckmittel in der Zeichnungsebene linksseitig des Betätigungskolbens 6 in die Bohrung 8 der Antriebswelle 1 zuführt, um den Betätigungskolben 6 bei Druckbeaufschlagung in der Zeichnungsebene nach rechts zu bewegen, um dadurch die Schaltklaue 5C in ihre geöffnete Position beziehungsweise in ihre entkoppelte Position zu bringen. Ferner sind in dem Deckel 27 weitere Zuführkanäle 25 vorgesehen, die Druckmittel in der Zeichnungsebene rechtsseitig des Betätigungskolbens 6 in die Bohrung 8 der Antriebswelle 1 führen, um den Betätigungskolben 6 bei Druckbeaufschlagung in der Zeichnungsebene nach links zu bewegen, wodurch die Schaltklaue 5C in ihre geschlossene Position beziehungsweise in ihre gekoppelte Position gebracht wird.

In Figur 8 ist eine geschnittene Teilansicht gemäß der Schnittlinie B in Figur 7 dargestellt. Aus dieser Ansicht wird deutlich, dass in dem Deckel 27 drei Zuführkanälen 25 vorgesehen sind, um die rechte Seite des Betätigungskolbens 6 mit Druckmittel zu beaufschlagen, um die Schaltklaue 5C zu schließen. Die Zuführkanäle 25 sind vorzugsweise in einem Winkel von 120° zueinander versetzt angeordnet.

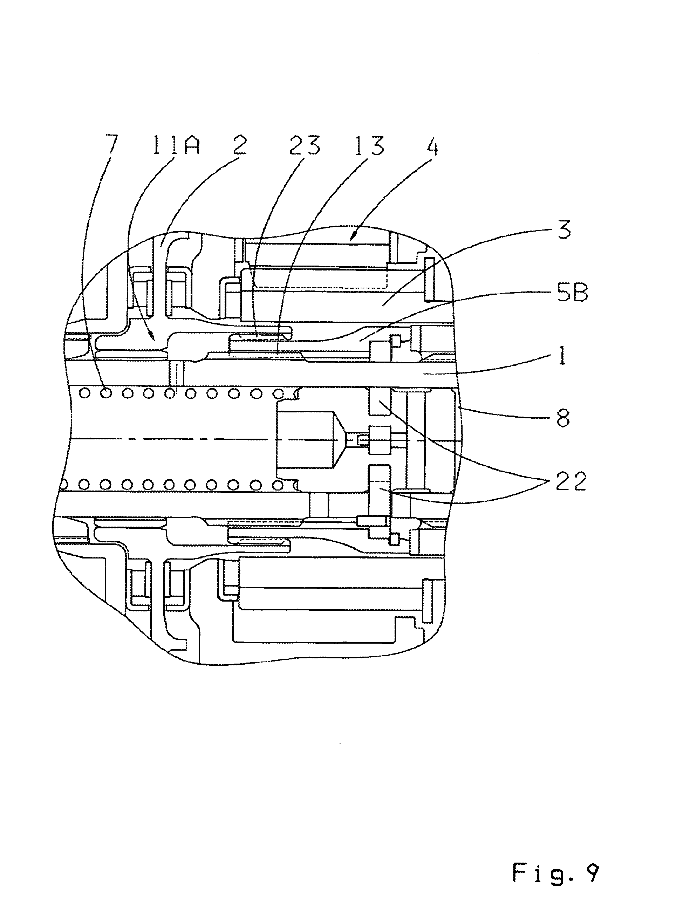

Schließlich zeigt Figur 9 eine siebente Ausführungsvariante, bei der der Betätigungskolben in der Bohrung der Antriebswelle 1 angeordnet ist und hydraulisch gegen die Kraft einer Rückstellfeder 7 bewegbar ist. Die Schaltklaue 5B und das korrespondierende Gegenstück 11A ist wie bei der fünften Ausführungsvariante gemäß Figur 5 mit einer gemeinsamen Steckverzahnung 23 ausgeführt. Im Unterschied dazu ist bei der siebenten Ausführungsvariante eine Klauenkupplung der Art "normalerweise geschlossen" (normally closed) ausgeführt. Dies bedeutet, dass sich die Schaltklaue 5B ohne Druckbeaufschlagung in ihrer geschlossenen Position beziehungsweise in der gekoppelten Position befindet. Sobald eine Druckbeaufschlagung des Betätigungskolbens 6 erfolgt, wird die Schaltklaue 5B geöffnet beziehungsweise entkoppelt von dem Gegenstück 11A.

Bei sämtlichen Ausführungsvarianten ausgenommen bei der siebenten Ausführungsvariante gemäß Figur 9 ist die Schaltklaue in ihrer geöffneten beziehungsweise entkoppelten Position dargestellt. In Figur 9 ist die Schaltklaue 5B nämlich in ihrer geschlossenen beziehungsweise gekoppelten Position gezeigt.

### Bezugszeichen

| | |
|---|---|
| 1 | Antriebswelle, Welle |
| 2 | Hohlrad |
| 3 | Sonnenrad |
| 4 | Planetenradsatz |
| 5 | Schaltklaue |
| 5A | Schaltklaue |
| 5B | Schaltklaue |
| 5C | Schaltklaue |
| 6 | Betätigungskolben |
| 7 | Rückstellfeder |
| 7A | Rückstellfeder |
| 8 | Bohrung |
| 9 | Mitnahmeblech |
| 10 | Langloch |
| 11 | Gegenstück |
| 11A | Gegenstück |
| 12 | Kronverzahnung |
| 13 | Steckverzahnung |
| 14 | Rechteckringdichtungen |
| 15 | O-Ringdichtungen |
| 16 | Kolben |
| 17 | Feder |
| 18 | Bohrung |
| 19 | Schmierölkanal |
| 20 | Zuführkanal |
| 21 | Bolzen |
| 22 | Mitnahmefinger |
| 23 | Steckverzahnung |
| 24 | Gleitlager |
| 25 | Zuführkanal |
| 26 | Rohr |
| 27 | Deckel |

## Patentansprüche

1. Anordnung zum schaltbaren Koppeln und Entkoppeln einer Antriebswelle (1) eines Automatgetriebes in Planentenbauweise mit zumindest einem Bauteil eines Planetenradsatzes (4), mit zumindest einer Klauenkupplung, welche eine Schaltklaue (5) und einen Betätigungskolben (6) umfasst und zentrisch im Wesentlichen innerhalb eines Sonnenrades (3) des Planetenradsatzes (4) angeordnet ist, wobei die Schaltklaue (5A, 5B, 5C) koaxial zur Antriebswelle (1) angeordnet ist, **dadurch gekennzeichnet, dass** der Betätigungskolben (6) im Inneren der Antriebswelle (1) angeordnet und in beide Bewegungsrichtungen hydraulisch betätigbar ist, wobei der Betätigungskolben (6) nur von einer Seite her ansteuerbar ist.

2. Anordnung nach Anspruch 1, **dadurch gekennzeichnet, dass** die Antriebswelle (1) mit einem Hohlrad (2) des Planetenradsatzes (4) schaltbar verbindbar ist.

3. Anordnung nach Anspruch 1 oder 2, **dadurch gekennzeichnet, dass** zur Druckmittelversorgung ein Rohr (26) in einen gehäusefesten Deckel (27) eingepresst ist und durch den Betätigungskolben (6) in die als Zylinderraum des Betätigungskolbens (6) vorgesehene Bohrung (8) der Antriebswelle (1) geführt ist, um den Betätigungskolben (6) zum Öffnen der Schaltklaue (5C) mit Druckmittel zu beaufschlagen.

4. Anordnung nach einem der Ansprüche 1 bis 3, **dadurch gekennzeichnet, dass** in dem gehäusefesten Deckel (27) zumindest ein Druckmittel-Zuführungskanal (25) vorgesehen ist, der in die als Zylinderraum des Betätigungskolbens (6) vorgesehene Bohrung (8) der Antriebswelle (1) geführt ist, um den Betätigungskolben (6) zum Schließen der Schaltklaue (5C) mit Druckmittel zu beaufschlagen.

5. Anordnung nach einem der Ansprüche 1 bis 4, **dadurch gekennzeichnet, dass** zwischen dem Innendurchmesser der Bohrung (8) in der Antriebswelle (1) und dem Außendurchmesser des Betätigungskolbens (6) eine Spielpassung vorgesehen ist.

6. Anordnung nach Anspruch 1, dadurch gekenntzeichnet, dass die Schaltklaue (5A) über zumindest einen durch die Antriebswelle (1) ragenden Bolzen (21) des Betätigungskolbens (6) betätigbar ist.

7. Anordnung nach Anspruch 1, **dadurch gekennzeichnet, dass** der Betätigungskolben (6) über mehrere radial durch die Antriebswelle (1) hindurchragende Mitnahmefinger (22) mit der Schaltklaue (5B) zur axialen Bewegung gekoppelt ist.

8. Anordnung nach einem der vorangehenden Ansprüche, **dadurch gekennzeichnet, dass** die Schaltklaue (5, 5A, 5C) und das korrespondierende Gegenstück (11) an dem zu schaltenden Hohlrad (2) über eine gemeinsame Kronverzahnung (12) verbindbar sind.

9. Anordnung nach einem der vorangehenden Ansprüche, **dadurch gekennzeichnet, dass** die Schaltklaue (5B) und das korrespondierende Gegenstück (11A) an dem zu schaltenden Hohlrad (2) über eine gemeinsame Steckverzahnung (23) verbindbar sind.

10. Anordnung nach Anspruch 8 oder 9, **dadurch gekennzeichnet, dass** die Kronverzahnung (12) oder die Steckverzahnung (23) ballig und/oder konisch oder mit Hinterschnitt und/oder stirnseitig mit einer Fase oder einem Radius und/oder mit einem Zentrierkonus ausgeführt sind.

11. Anordnung nach einem der vorangehenden Ansprüche, **dadurch gekennzeichnet, dass** die Schaltklaue (5, 5A, 5B, 5C) über eine Steckverzahnung (13) mit der Antriebswelle (1) drehfest verbunden ist.

12. Anordnung nach einem der vorangehenden Ansprüche, **dadurch gekennzeichnet, dass** zur Dämpfung der Schaltbewegung der Schaltklaue (5, 5A) zumindest ein Kolben (16) als Überdruckventil mit einer rückstellenden Feder (17) im Inneren der Antriebswelle (1) angeordnet ist.

13. Anordnung nach einem der vorangehenden Ansprüche, **dadurch gekennzeichnet, dass** eine Rückstellfeder (7) zur Rückstellung der Schaltklaue (5) im Inneren der Antriebswelle (1) angeordnet ist, wobei die Schaltklaue (5) über zumindest eine durch Öffnungen in der Antriebswelle (1) hindurchragende Mitnahme (9) zurückstellbar ist, die mit der Rückstellfeder (7) gekoppelt ist.

14. Anordnung nach einem der Ansprüche 1 bis 12, **dadurch gekennzeichnet, dass** eine Rückstellfeder (7A) zur Rückstellung der Schaltklaue (5) in radialer Richtung zwischen der Antriebswelle (1) und der Schaltklaue (5) angeordnet ist, wobei die Rückstellung direkt mit der Schaltklaue (5) gekoppelt ist.

## Claims

1. Arrangement for the switchable coupling and decoupling of a drive shaft (1) of an automatic transmission of planetary type of construction to at least one component of a planetary gear set (4), having at least one jaw clutch which comprises a shift jaw (5) and an actuating piston (6) and which is arranged centrally substantially within a sun gear (3) of the planetary gear set (4), wherein the shift jaw (5A, 5B, 5C) is arranged coaxially with respect to the drive shaft (1), **characterized in that** the actuating piston (6) is arranged in the interior of the drive shaft (1) and is hydraulically actuable in both movement directions, wherein the actuating piston (6) can be driven only from one side.

2. Arrangement according to Claim 1, **characterized in that** the drive shaft (1) can be switchably connected to an internal gear (2) of the planetary gear set (4).

3. Arrangement according to Claim 1 or 2, **characterized in that**, for the supply of pressure medium, a tube (26) is pressed into a cover (27) fixed with respect to a housing and is guided through the actuating piston (6) into the bore (8), which is provided as a cylinder chamber of the actuating piston (6), of the drive shaft (1) in order to effect an impingement of pressure medium on the actuating piston (6) for the opening of the shift jaw (5C).

4. Arrangement according to one of Claims 1 to 3, **characterized in that**, in the cover (27) fixed with respect to the housing, there is provided at least one pressure medium supply duct (25) which extends into the bore (8), which is provided as a cylinder chamber of the actuating piston (6), of the drive shaft (1) in order to effect an impingement of pressure medium on the actuating piston (6) for the closing of the shift jaw (5C).

5. Arrangement according to one of Claims 1 to 4, **characterized in that** a clearance fit is provided between the inner diameter of the bore (8) in the drive shaft (1) and the outer diameter of the actuating piston (6).

6. Arrangement according to Claim 1, **characterized in that** the shift jaw (5A) can be actuated by means of at least one pin (21), which projects through the drive shaft (1), of the actuating piston (6).

7. Arrangement according to Claim 1, **characterized in that** the actuating piston (6) is coupled to the shift jaw (5B) for axial movement by means of a plurality of driving fingers (22) which project radially through the drive shaft (1).

8. Arrangement according to one of the preceding claims, **characterized in that** the shift jaw (5, 5A, 5C) and the corresponding counterpart (11) on the internal gear (2) to be shifted can be connected by means of a common crown toothing (12).

9. Arrangement according to one of the preceding claims, **characterized in that** the shift jaw (5B) and the corresponding counterpart (11A) on the internal gear (2) to be shifted can be connected by means of a common spline toothing (23).

10. Arrangement according to Claim 8 or 9, **characterized in that** the crown toothing (12) or the spline toothing (23) is of spherical and/or conical form or is formed with an undercut and/or is formed on the end side with a chamfer or a radius and/or with a centring cone.

11. Arrangement according to one of the preceding claims, **characterized in that** the shift jaw (5, 5A, 5B, 5C) is rotationally conjointly connected to the drive shaft (1) by means of a spline toothing (13).

12. Arrangement according to one of the preceding claims, **characterized in that**, for the damping of the shift movement of the shift jaw (5, 5A), at least one piston (16) is arranged as a pressure relief valve with a restoring spring (17) in the interior of the drive shaft (1).

13. Arrangement according to one of the preceding claims, **characterized in that** a restoring spring (7) for the restoring movement of the shift jaw (5) is arranged in the interior of the drive shaft (1), wherein the restoring movement of the shift jaw (5) can be effected by means of at least one driver (9) which projects through openings in the drive shaft (1) and which is coupled to the restoring spring (7).

14. Arrangement according to one of Claims 1 to 12, **characterized in that** the restoring spring (7A) for the restoring movement of the shift jaw (5) is arranged in the radial direction between the drive shaft (1) and the shift jaw (5), wherein the restoring movement is coupled directly to the shift jaw (5).

## Revendications

1. Ensemble pour l'accouplement et le désaccouplement commutables d'un arbre d'entraînement (1) d'une boîte de vitesses automatique de construction planétaire comprenant au moins un composant d'un train épicycloïdal (4), comprenant au moins un embrayage à crabots, qui comprend un crabot d'accouplement (5) et un piston de commande (6) et qui est disposé centralement essentiellement à l'intérieur d'une roue solaire (3) du train épicycloïdal (4), le crabot d'accouplement (5A, 5B, 5C) étant disposé coaxialement à l'arbre d'entraînement (1), **caractérisé en ce que** le piston de commande (6) est disposé à l'intérieur de l'arbre d'entraînement (1) et peut être actionné hydrauliquement dans les deux directions de déplacement, le piston de commande (6) pouvant être commandé seulement depuis un côté.

2. Ensemble selon la revendication 1, **caractérisé en ce que** l'arbre d'entraînement (1) peut être connecté de manière commutable à une couronne dentée (2) du train épicycloïdal (4).

3. Ensemble selon la revendication 1 ou 2, **caractérisé en ce que** pour l'alimentation en fluide de pression, un tube (26) est pressé à l'intérieur d'un couvercle (27) fixé au boîtier, et est guidé par le piston de commande (6) dans l'alésage (8) de l'arbre d'entraînement (1) servant d'espace de cylindre du piston de commande (6), afin de solliciter le piston de commande (6) avec du fluide de pression de manière à ce qu'il ouvre le crabot d'accouplement (5C).

4. Ensemble selon l'une quelconque des revendications 1 à 3, **caractérisé en ce que** dans le couvercle (27) fixé au boîtier est prévu au moins un canal d'alimentation en fluide de pression (25), qui est guidé dans l'alésage (8) de l'arbre d'entraînement (1) servant d'espace de cylindre du piston de commande (6), afin de solliciter le piston de commande (6) avec du fluide de pression de manière à ce qu'il ferme le crabot d'accouplement (5C).

5. Ensemble selon l'une quelconque des revendications 1 à 4, **caractérisé en ce qu'**entre le diamètre intérieur de l'alésage (8) dans l'arbre d'entraînement (1) et le diamètre extérieur du piston de commande (6) est prévu un ajustement avec jeu.

6. Ensemble selon la revendication 1, **caractérisé en ce que** le crabot d'accouplement (5A) peut être actionné par le biais d'au moins un boulon (21) du piston de commande (6) faisant saillie à travers l'arbre d'entraînement (1).

7. Ensemble selon la revendication 1, **caractérisé en ce que** le piston de commande (6) est accouplé par le biais de plusieurs doigts d'entraînement (22) saillant radialement à travers l'arbre d'entraînement (1) au crabot d'accouplement (5B) en vue d'un déplacement axial.

8. Ensemble selon l'une quelconque des revendications précédentes, **caractérisé en ce que** les crabots d'accouplement (5, 5A, 5C) et l'élément conjugué correspondant (11) peuvent être connectés par le biais d'une denture de couronne commune (12) à la couronne dentée (2) à accoupler.

9. Ensemble selon l'une quelconque des revendications précédentes, **caractérisé en ce que** le crabot d'accouplement (5B) et l'élément conjugué correspondant (11A) peuvent être connectés par le biais d'une denture enfichable commune (23) à la couronne dentée (2) à accoupler.

10. Ensemble selon la revendication 8 ou 9, **caractérisé en ce que** la denture de couronne (12) ou la denture enfichable (23) sont réalisées sous forme sphérique et/ou conique ou avec une contre-dépouille et/ou sous forme droite avec un biseau ou un rayon et/ou avec un cône de centrage.

11. Ensemble selon l'une quelconque des revendications précédentes, **caractérisé en ce que** le crabot d'accouplement (5, 5A, 5B, 5C) est connecté de manière solidaire en rotation par le biais d'une denture enfichable (13) à l'arbre d'entraînement (1).

12. Ensemble selon l'une quelconque des revendications précédentes, **caractérisé en ce que** pour l'amortissement du mouvement d'accouplement du crabot d'accouplement (5, 5A), au moins un piston (16) est disposé en tant que soupape de surpression avec un ressort de rappel (17) à l'intérieur de l'arbre d'entraînement (1).

13. Ensemble selon l'une quelconque des revendications précédentes, **caractérisé en ce qu'**un ressort de rappel (7) est disposé à l'intérieur de l'arbre d'entraînement (1) pour le rappel du crabot d'accouplement (5), le crabot d'accouplement (5) pouvant être ramené par le biais d'au moins un entraînement (9) traversant des ouvertures dans l'arbre d'entraînement (1), lequel entraînement est accouplé au ressort de rappel (7).

14. Ensemble selon l'une quelconque des revendications 1 à 12, **caractérisé en ce qu'**un ressort de rappel (7A) pour le rappel du crabot d'accouplement (5) dans la direction radiale est disposé entre l'arbre d'entraînement (1) et le crabot d'accouplement (5), le rappel étant directement accouplé au crabot d'accouplement (5).
